# EUROPEAN PATENT APPLICATION

(11) **EP 3 338 875 A1**
(43) Date of publication of application: **27.06.2018**
(21) Application number: 16306799.4
(22) Date of filing: 22.12.2016
(51) Int. Cl.: B01D 53/04

(54) **GAS EXTRACTION METHOD EMPLOYING AN IMPROVED THERMAL SWING ADSORPTION PROCESS, AND APPARATUS TO CONDUCT THE SAME**

(71) Applicant: Solvay SA, 1120 Brussels (BE)
(72) Inventor: DUBOIS, Eric Pierre, 4219 Wasseiges (BE); COQUEREL, Jean-Paul, 54950 Saint-Clement (FR)

(57) **Abstract**

Thermal swing adsorption process for removing a component from a gas mixture comprising the steps of:
i) passing the gas mixture in contact with an adsorbent material at a first temperature T_{A} to adsorb the component from the gas mixture on the adsorbent material;
ii) heating the adsorbent material to a second temperature T_{D} to desorb the component from the adsorbent material;
iii) employing auxiliary means (17, 18) in desorbing the component from the adsorbent material; and
repeating the cycle of steps i) to iii).

Further, an apparatus to conduct the thermal swing adsorption process is also described.

## Description

This invention relates to a method for removing a gas component, preferably carbon dioxide, from a gas mixture, using an adsorbent material in a shell and tube environment employing a thermal swing adsorption (TSA) process. Auxiliary means, e.g. a piston or pistons, are employed in desorbing the adsorbed gas component from the adsorbent material to extract the last concentrated portion of adsorbed gas component. Said "breathing assistance" via piston improves the efficiency of the TSA process of the invention (hereinafter referred to as Breathing Thermal Swing Adsorption - BTSA). Further, the invention relates to an apparatus to conduct the BTSA process. A preferred embodiment of the invention is based on one adsorber comprising at least two shell/tube areas capable of continuously repeating the thermal cycle of breathing thermal swing adsorption and desorption, and wherein two pistons at the extremity of the adsorber are used to conduct the breathing of the active zones.

In the prior art, various carbon capture methods and apparatus to conduct said methods are disclosed, including but not limited to methods and apparatus for adsorption type carbon capture. In such methods, carbon dioxide is adsorbed, e.g. from a flue gas, to an adsorbing material at low temperatures and desorbed at higher temperatures.

US 2003/00037672 A1 discloses a TSA process for removing a component, e.g. carbon dioxide, from a feed gas wherein adsorbent particles are packed in tubes of a shell/tube heat exchanger in which heating or cooling fluid flows in a shell side passage of said heat exchanger. The process works by (a) first passing the feed gas in contact with the adsorbent, preferably alumina and/or zeolite, to adsorb the component from the feed gas on the adsorbent, (b) heating the adsorbent and passing a regenerating gas in contact with the adsorbent to desorb the feed gas component from the adsorbent, (c) cooling the adsorbent, and (d) repeating the cycle of steps (a) to (c), wherein the adsorbent is heated by passing a heating fluid which is separated from the adsorbent but is able to exchange heat with the adsorbent, such that the amount of heat supplied to the adsorbent by the heating fluid is independent of the amount of feed and regenerating gas passed.

WO 2009/126607 A2 discloses a process for separating carbon dioxide from a carbon dioxide containing gas stream containing water vapor and additional impurities, for example, nitrogen, oxygen, sulfur oxides, nitrogen oxides, and mercury in which the adsorbent regeneration step comprises heating the adsorbent bed directly with a gas stream or indirectly using steam or hot fluid in a heat exchanger configuration, and further comprising bed evacuation after bed heating to recover additional amounts of carbon dioxide. The carbon dioxide is captured by subjecting the carbon dioxide gas feed stream to a temperature swing adsorption step. The TSA step comprises an adsorption step for producing a substantially dry carbon dioxide-depleted stream, and an adsorbent regeneration step comprising heating the adsorbent bed to produce a substantially water vapor-free carbon dioxide stream. Moisture from the gas stream containing carbon dioxide is optionally removed by pressure swing adsorption, temperature swing adsorption, membrane separation, or absorption prior to carbon dioxide capture.

A disadvantage of the systems of the prior art is that they require a large amount of time to complete CO₂ desorption.

The objective of the present invention is to overcome this disadvantage by using an innovative principle for extracting a certain gas component of a gas mixture.

Subject-matter of the invention is a method for gas separation wherein an adsorbent material is used in a shell and tube environment. A gas mixture flows through the adsorbent material while a first fluid is circulating in the shell around the adsorbent material such to maintain the temperature required to achieve maximum adsorbance (hereinafter referred to as T_{A}). Following adsorption, to capture adsorbed gas component(s), a second fluid is passed through the shell at a temperature exceeding T_{A} (hereinafter referred to as T_{D}). Further, auxiliary means are employed in desorbing the adsorbed gas component(s) from the adsorbent material to extract the last concentrated portion of adsorbed gas component(s). A third fluid is used to flush the shell between thermal cycles. The thermal cycle is repeated continuously.

Duration of the temperature swing adsorption cycle is in a range of from about 1 minute to about 60 minutes, preferably from about 5 to about 15 minutes.

The gas mixture employed in the process of the invention can be any gas mixture. Preferably, the employed gas mixture is flue gas, e.g. from a coal boiler, typically comprising 2 - 20 vol.-%, preferably 5 - 15 vol.-% of carbon dioxide. Upon employing the process according to the invention, carbon dioxide concentrations in the effluent of 60 - 65 vol.-% can be achieved which is close to the theoretical value of 65 - 70% obtained by comparing the adsorption isotherms of carbon dioxide and the further main components of the flue gas (nitrogen, oxygen, NOₓ and water) (see e.g. "Adsorption: Theory, Modeling and Analysis" (Surfactant Science Series, Vol. 107), Jozsef Toth, ed., Marcel Dekker Inc., New York, 2002).

The adsorption is conducted in a bed comprising an adsorbent material, which preferentially adsorbs carbon dioxide in the gas stream.

The adsorbent material may be any material capable of absorbing carbon dioxide. Preferably, the adsorbent material comprises activated carbon. Most preferably, monoliths made from extruded activated carbon are employed. Such monoliths are e.g. available from CarboTec AC GmbH in Essen, Germany. Preferably, such monoliths by mechanical means are put into a cylindrical shape. Cylindrical monoliths typically have a length of 100 - 800 mm and a diameter of 5 - 100 mm, more preferably 10 - 60 mm, most preferably 20 - 45 mm. Several cylindrical monoliths can be stacked to match the dimensions of the tube of the shell and tube environment.

Optionally, the monoliths are enveloped by a thermal shrink pipe of a polymer that withstands a continuous operation temperature exceeding T_{A}.

Preferably the polymer is a fluorinated polymer. Most preferably, semicrystalline, fully fluorinated, melt processable fluoropolymers are employed for enveloping, such as Hyflon® PFA or Hyflon® MFA®, available from Solvay S.A.

The monoliths are enveloped with the polymer employing known methods, e.g. those disclosed in https://en.wikipedia.org/wiki/Heat-shrink_tubing or in US Patent No. 3,396,460.

The first, second and third fluids employed in the process of the invention can be any fluid capable of acting as a thermal energy carrier. Preferably, liquids are being used as the first fluid. The most preferred first fluid is water. Preferably, liquids or gases are being used as the second fluid. The most preferred second fluid is water or steam. Preferably, gases are being used as the third fluid. The most preferred third fluid is air.

T_{A} is in a range of from 0 to 120 °C. Preferably, T_{A} is from 20 to 50 °C.

T_{D} is in a range of from 20 to 150 °C. Preferably, T_{D} is from 80 to 130 °C.

Auxiliary means employed in desorbing the adsorbed gas component(s) from the adsorbent material may be any means suitable to extract the last concentrated portion of gas component(s) adsorbed to the adsorbent material. Preferably, such means include the use of a piston in the equipment to extract, at the end of the desorption step, the last concentrated portion of gas component(s).

A typical extraction process according to the invention includes the following steps:
(i) Pass a gas mixture in contact with an adsorbent material at a first temperature T_{A} to adsorb component(s) from the gas mixture on the adsorbent material;
(ii) Heat the adsorbent material to a second temperature T_{D} to desorb the component(s) from the adsorbent material;
(iii) Employ auxiliary means in desorbing the component from the adsorbent material;
(iv) Repeat steps (i) - (iii),
(v) Optionally, remove (residual) coolant from shell between steps (i) and (ii)
(vi) Optionally, remove (residual) heatant from shell between steps (iii) and (iv)

The time of exposure of the absorbent to the gas mixture flow is typically in the range of from 50 to 750 seconds, preferably from 100 to 300 seconds.

The flow speed of the gas mixture is adapted such to maintain laminar flow. Typical flow speeds include the range of below 17 meters/second, preferably from 5 to 10 meters/second.

Optional removal of (residual) coolant from the shell is typically accomplished in from 5 to 60 seconds, preferably from 10 to 30 seconds.

Desorption of adsorbed gas component(s) is typically accomplished in the range from 50 to 800 seconds, preferably from 100 to 500 seconds.

Extraction of last concentrated portion of gas component(s) via auxiliary means is typically accomplished in the range from 1 to 30 seconds, preferably 5 to 15 seconds.

Optional removal of heatant from the shell is typically accomplished in from 5 to 60 seconds, preferably from 10 to 30 seconds.

In a further aspect of the invention, an apparatus to carry out the extraction process of the invention is disclosed. Such apparatus may have any shape but preferably has a cylindrical shape. The apparatus is made from a material that is permanently able to withstand the gas mixture at a temperature of T_{D}. Preferably the apparatus is made from stainless steel. It has a gas inlet, a gas outlet, an interior space to accommodate the adsorbent material and an outside shell having a gaseous coolant or heatant inlet and outlet, and a liquid coolant or heatant inlet and outlet. Flow breakers are optionally placed inside the shell. The upper end of the apparatus comprises a piston to effect separation of the adsorbent bed from the gas inlet, but still permitting release of gaseous component(s) during the desorption process. The lower end of the apparatus comprises a piston to effect separation of the adsorbent bed from the gas outlet and to promote gas flow through the adsorbent material during step (iii).

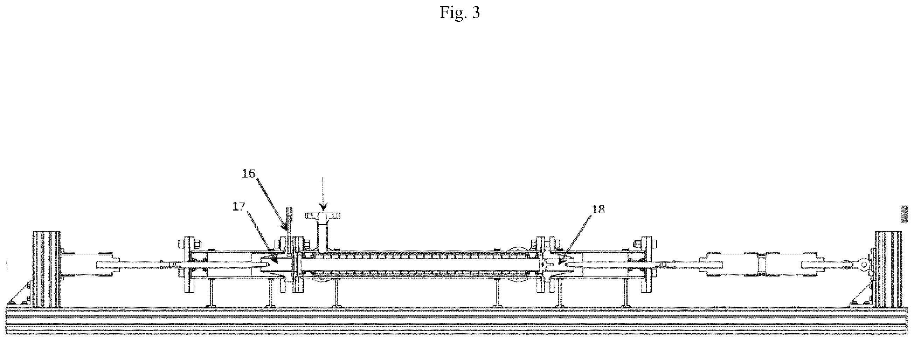

More preferably, the apparatus of the invention (1) has an upper gas inlet (2), a lower gas outlet (3), a cylindrical carrier (4) bearing a cylindrical inner space (5) to accommodate the adsorbent material and an outside shell (6) having a gaseous coolant or heatant outlet (10) and inlet (9), and a liquid coolant or heatant inlet (7) and outlet (8). Flow breakers (11) are placed inside the shell. The cylindrical carrier (4) bears flanges (13) at the top and the bottom for monolith insertion/removal. The head (14) and bottom (15) elements of the apparatus (1) each bear a flange for the connection with the carrier (4). The head element (14) further bears an outlet (16) for discharge of gaseous component(s) released during desorption. The head (14) and bottom (15) elements each comprise a piston (17, 18). The upper piston (17) is designed to effect separation of the adsorbent bed from the gas inlet (2), but still permitting release of gaseous component(s) during the desorption process. The lower piston (18) is designed to effect separation of the adsorbent bed from the gas outlet (3). Further, the lower piston (18) is designed to promote gas flow through the adsorbent during desorption. The upper piston (17) is driven by one hydraulic cylinder as shown in Figure 3. The lower piston (18) is driven by two sequential hydraulic cylinders as shown in Figure 3. The lower piston (18) drive arrangement allows to first close the gas outlet (3) and to subsequently push the last concentrated portion of adsorbed gas component(s) towards the upper end.

In a preferred embodiment, the dimensions of the upper gas inlet (2), the lower gas outlet (3) and the inner space (5) are designed such to maintain laminar flow.

In a further preferred embodiment, dimensions of the cylindrical carrier (4), the outside shell (6), the gaseous coolant or heatant outlet (7) and inlet (8) and the liquid coolant or heatant inlet (9) and outlet (10) are designed such to maintain turbulent flow.

In a preferred embodiment, the flow breakers are made from stainless steel.

In a further preferred embodiment, the flow breakers have the approximate shape of three quarters of an O-ring, wherein the O-ring has an aspect ratio of from 1:5 to 1:1,000, and are mounted offset from each other at 180 degree angels. In a further preferred embodiment, flow breakers are held in place by rods (12) guiding through bores of the flow breakers.

In a further preferred embodiment, the pistons (17, 18) have an outer diameter matching the inner diameter of the inner space (5).

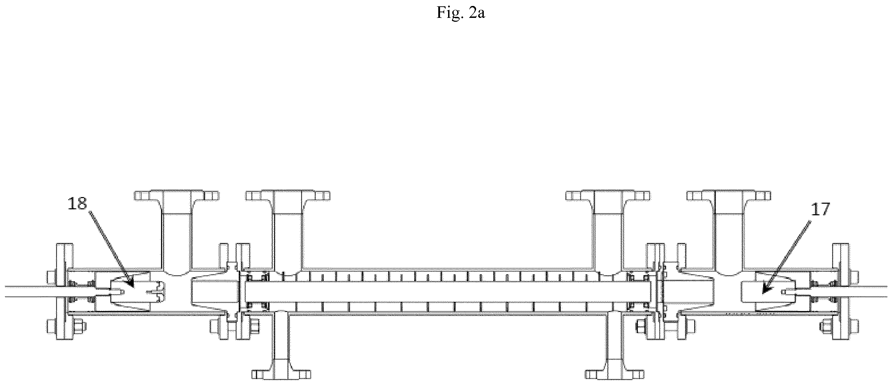

Employing the preferred apparatus of the invention, the process of the invention is conducted as depicted in Figs. 2a - 2h.

Fig. 2a shows the position of upper and lower pistons (17, 18) during the adsorption step at the beginning of the cycle.

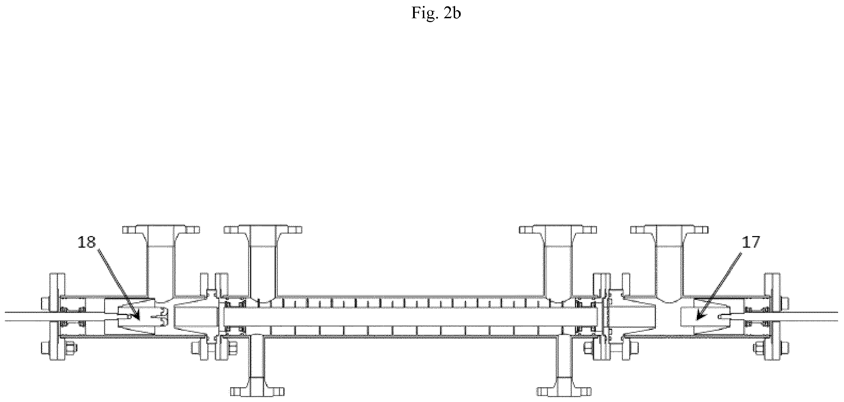

Fig. 2b shows the position of pistons (17, 18) for the purpose of closing gas inlet and outlet.

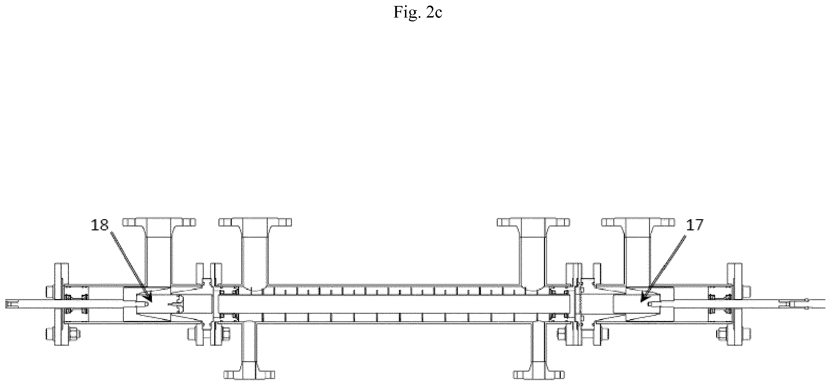

Fig. 2c shows the position of pistons (17, 18) with fully closed gas inlet and outlet during optional, removal of (residual) coolant from the shell.

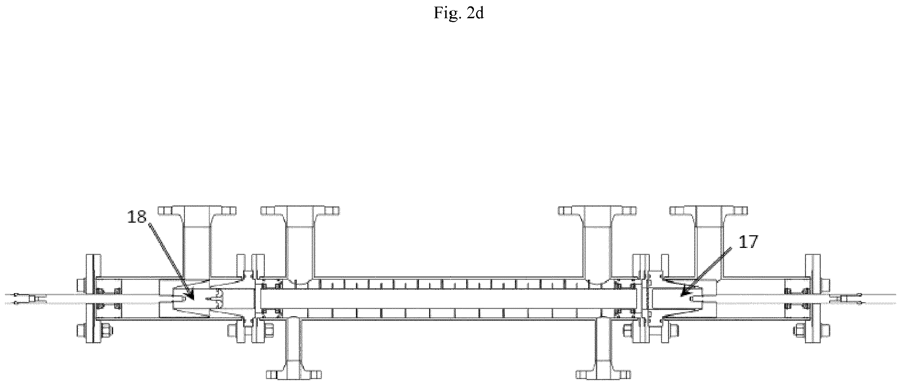

Fig. 2d shows the position of pistons (17, 18) during the desorption step. Heatant is flowing through the shell.

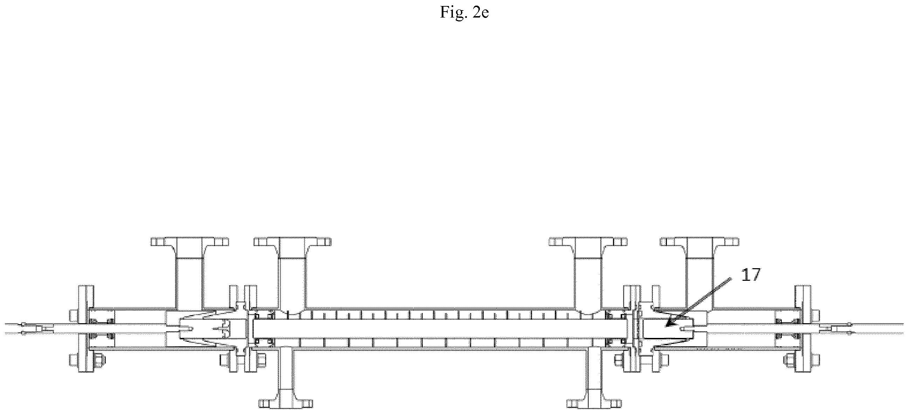

Fig. 2e shows the position of pistons (17, 18) at the beginning of extracting the last concentrated portion of adsorbed component(s).

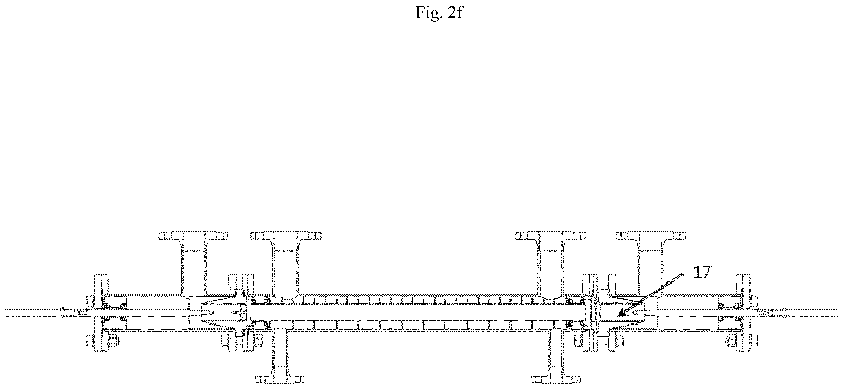

Fig. 2f shows the position of pistons (17, 18) at the end of extracting the last concentrated portion of adsorbed component(s).

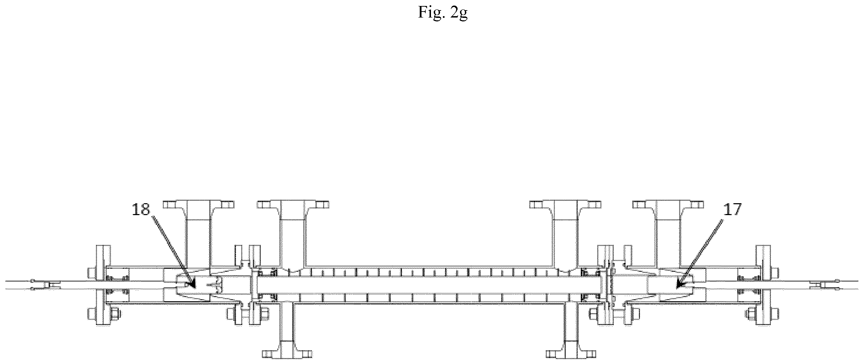

Fig 2g shows the position of pistons (17, 18) during, optional, removal of (residual) heatant from shell

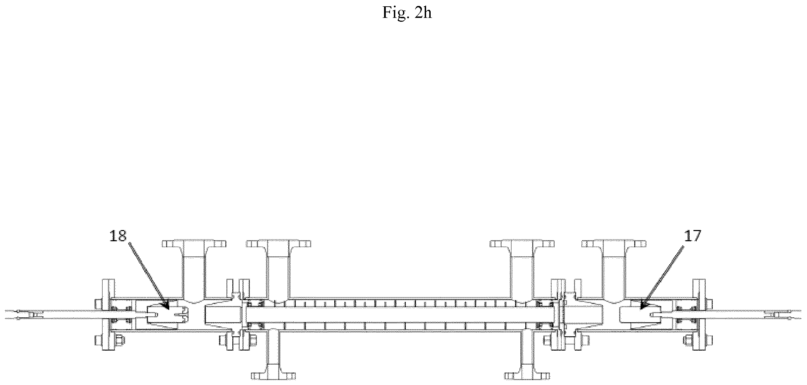

Fig 2h shows the position of pistons (17, 18) at the completion of the cycle

Carbon dioxide concentrations in the offgas of 63 % can be achieved in one step.

A preferred embodiment of the invention is based on one adsorber comprising at least two shell and tube areas according to the invention, capable of continuously repeating the thermal cycle of breathing thermal swing adsorption and desorption, and wherein two pistons at the extremity of the adsorber are used to conduct the breathing of the active zones.

### Brief description of the drawings

Fig. 1: Schematic representation of BTSA apparatus according to the invention
Fig 2a - h: Schematic representation of BTSA process steps
Fig 3: Schematic representation of mounted BTSA apparatus

### Example

Carbon monoliths made from CarboTech® HC 4 C 1200 were acquired from CarboTech AC GmbH in Essen, Germany. Such monoliths were cut to a cylindrical shape having a diameter of 41 mm and a length of approximately 100 mm. A stack of monoliths was prepared matching the dimensions of the inner space of the adsorption equipment. Monolith stack was enveloped in Hyflon® PFAP420, available from Solvay S.A, by known methods, such as the one disclosed in US Patent No. 3,396,460.

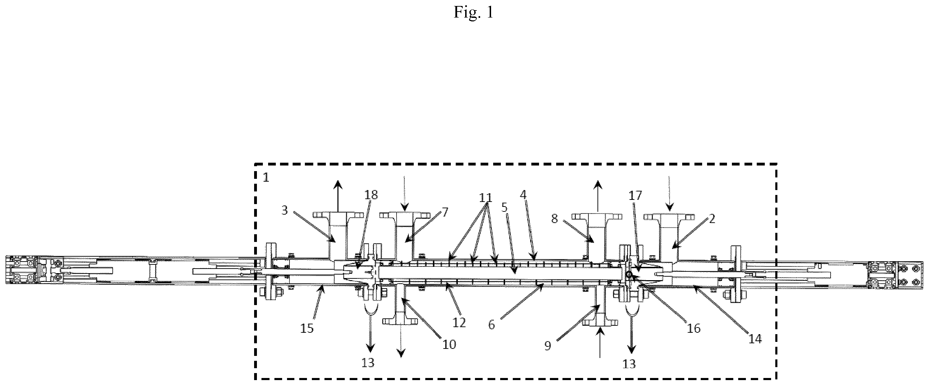

Enveloped monoliths were inserted into the inner space of an apparatus according to Fig. 1 and extraction of carbon dioxide was conducted.

Extraction parameters are disclosed in Table 1.

**Table 1: Extraction parameters**

| Process step | T_{A} (°C) | flow speed (m/s) | T_{D} (°C) | upper piston (17) position | lower piston (18) position | time (s) |
|---|---|---|---|---|---|---|
| Adsorption | 30 | 6 | N/A | 100% up | 100% down | 300 |
| Isolation | N/A | 0 | N/A | 67% up | 75% down | 3 |
| Drain water from shell | N/A | 0 | N/A | 67% down | 50% up/down | 20 |
| Isolation | N/A | 0 | N/A | 100% down | 50% up/down | 3 |
| Desorption | N/A | 15 | 130 | 100% down | 75% up | 500 |
| Push out CO₂ ("breathing") | N/A | 0,07 | 130 | 100% down | 100% up | 10 |
| Isolation | N/A | 0 | N/A | 33% up | 50% up/down | 3 |
| Drain condensate from shell | N/A | 0 | N/A | 100% up | 100% down | 20 |
| | | | | | | |
| Start from step 1 | | | | | | |

Carbon dioxide desorption was accomplished by raising the temperature in the shell using steam to T_{D} = 130 °C.

Carbon dioxide concentration in the offgas leaving outlet (16) was measured by mass spectrometry employing a Prima BT Bench top Mass Spectrometer from Thermo Fisher Scientific Inc., Waltham, MA, USA. A method recommended by the equipment manufacturer employing a standard gas composition was used for calibration. Same operating parameters as employed in calibration were used to determine carbon dioxide concentration in the offgas.

Results are collected in Table 2.

**Table 2: Carbon dioxide desorption results**

| Time (s) | CO₂ concn. in offgas (vol -%) |
|---|---|
| 0 | 10,5 |
| 227 | 31,4 |
| 263 | 37,5 |
| 328 | 44,0 |
| 392 | 55,0 |
| 409 | 58,1 |
| 433 | 62,0 |
| 445 | 63,4 |

## Claims

1. A thermal swing adsorption process for removing a component from a gas mixture comprising the steps of:
i) passing the gas mixture in contact with an adsorbent material at a first temperature T_{A} to adsorb the component from the gas mixture on the adsorbent material;
ii) heating the adsorbent material to a second temperature T_{D} to desorb the component from the adsorbent material;
iii) employing auxiliary means in desorbing the component from the adsorbent material; and
repeating the cycle of steps i) to iii).

2. A process as claimed in claim 1, wherein the adsorbent material is used in the tube of a shell and tube environment.

3. A process as claimed in claim 1 or 2, wherein the gas mixture flows through the adsorbent material while a first fluid is circulating in the shell around the adsorbent material such to maintain the temperature T_{A} required to achieve maximum adsorbance.

4. A process as claimed in any of claims 1 to 3, wherein to desorb and capture adsorbed component, a second fluid is passed through the shell at a temperature T_{D} exceeding T_{A}.

5. A process as claimed in any of claims 1 to 4, wherein the auxiliary means to extract the last concentrated portion of adsorbed component include the use of a piston.

6. A process as claimed in any of claims 1 to 5, wherein the duration of the temperature swing adsorption cycle is in a range of from about 1 minute to about 60 minutes, preferably from about 5 to about 15 minutes.

7. A process as claimed in any of claims 1 to 6, wherein the gas mixture is flue gas.

8. A process as claimed in any of claims 1 to 7, wherein the adsorbed component is carbon dioxide.

9. A process as claimed in any of claims 1 to 8, wherein the adsorbent material is activated carbon.

10. A process as claimed in claim 9, wherein the activated carbon is in the form of a monolith.

11. A process as claimed in claim 10, wherein the monolith is enveloped by a thermal shrink pipe of a polymer that withstands a continuous operation temperature exceeding T_{A}.

12. Apparatus for use in a thermal swing adsorption process for removing a component of a gas mixture comprising an upper gas inlet (2), a lower gas outlet (3), a cylindrical carrier (4) bearing a cylindrical inner space (5) to accommodate the adsorbent material and an outside shell (6) having a gaseous coolant or heatant outlet (7) and inlet (8), and a liquid coolant or heatant inlet (9) and outlet (10), an outlet (16) for discharge of component released during desorption, and pistons (17, 18) wherein the upper piston (17) is designed to effect separation of the adsorbent material bed from the gas inlet (2), but still permitting release of adsorbed component during the desorption process, and wherein the lower piston (18) is designed to effect separation of the adsorbent bed from the gas outlet (3) and to promote gas flow through the adsorbent during desorption.

13. Apparatus as claimed in claim 12, wherein flow breakers (11) are placed inside the shell.

14. Apparatus as claimed in claim 12 or 13, wherein the upper piston (17) is driven by one hydraulic cylinder, and the lower piston (18) is driven by two sequential hydraulic cylinders.

15. Adsorber for carrying out a continuous thermal swing adsorption process comprising at least two shell and tube apparatus as claimed in claims 12 to 14.
